# EUROPEAN PATENT SPECIFICATION

(11) **EP 0 505 449 B1**
(45) Date of publication and mention of the grant of the patent: **24.04.1996**
(21) Application number: 91901309.4
(22) Date of filing: 14.12.1990
(51) Int. Cl.: G01K 3/04, G01K 11/06

(54) **TIME-TEMPERATURE INDICATOR**
INDIKATOR FÜR ZEIT-TEMPERATUR
INDICATEUR DE RAPPORT TEMPS-TEMPERATURE

(30) Priority: 14.12.1989 GB 8928246; 26.10.1990 GB 9023393
(43) Date of publication of application: 30.09.1992
(73) Proprietor: FOOD GUARDIAN LIMITED, Bewdley, Worcs. DY12 2EU (GB)
(72) Inventor: COLLEY, Terence, Bewdley Worcs. DY12 2EU (GB); MINTER, Stephen, Hayfield Stockport SK12 5JE (GB); CARNIE, John, Heaton Mersey Stockport SK4 3KT (GB)
(74) Representative: Atkinson, Peter Birch
(86) International application number: GB9001959
(87) International publication number: WO9109287

(56) References cited:
- EP-A- 0 092 034
- DE-A- 2 130 926
- GB-A- 2 064 768
- GB-A- 2 151 784
- US-A- 3 055 759
- US-A- 3 414 415
- US-A- 3 420 205
- US-A- 3 479 877
- US-A- 3 751 382
- US-A- 4 148 272
- US-A- 4 647 224

## Description

The present invention relates to an indicating element for use in conjunction with a product which is required to be maintained under a particular temperature or tempeature-time condition.

With reference to GB-A-2 266 954 the applicant has voluntarily limited the scope of the present application, and submitted separate claims for GB.

There are many products which need to be stored under conditions such that a particular temperature limit is not exceeded, or at least is not exceeded for longer than a predetermined time. For convenience, both of these conditions are referred to generically herein as the predetermined temperature condition. Generally the temperature limit will be a maximum (rather than a minimum) temperature.

Particular examples are certain types of food product that have been pre-cooked or processed by freezing, irradiation, partial cooking, freeze drying or steaming (or other food processing procedures). If such products are not stored in accordance with the predetermined temperature conditions then there is the danger of contamination by organisms which are injurious to human health. This danger is not removed by subsequently storing the product below the temperature maximum. Further examples of products which may need to be stored in accordance with predetermined temperature conditions are certain pharmaceuticals which would otherwise deteriorate.

Currently, the purchasers of such susceptible products are not able to determine whether the product has been stored in contravention of the predetermined conditions. For example, frozen food purchased in, say, a supermarket may be adequately frozen at the time of sale but the purchaser is unable to tell whether the food has previously been incorrectly stored. This has the potential health disadvantages mentioned above.

An indicating element comprising polyethyleneglycol as a fusible material which flows into a substrate when a predetermined temperature is reached and an indicating system for producing a physically detectable change in this substrate is known from EP-A-0 092 034.

According to the present invention there is provided an indicating element for use in conjunction with a product which needs to be maintained under a pre-determined temperature condition, the indicating element comprising a fusible material which flows above the predetermined temperature and which comprises polycaprolactone triol, polyethylene glycol C₁₋₄ alkyl ether, or polyvinyl alcohol, a substrate into which said material may flow, and an indicator system for producing a physically detectable change in the substrate when said material flows therein.

The fusible materials which are used in the invention have been selected because they have "sharp" melting points which are substantially constant through cycles of melting and re-solidification. Thus, the selected materials are suitable for indicating elements in which the physically detectable change occurs as a result of flow of the fusible material along an elongate path (the length of the change along the path being indicative of the total time above the pre-determined temperature) since the fusible materials will consistently melt and resolidify at the pre-determined temperature so that the elements will accurately reflect the total exposure time above that temperature.

The exact melting point of the fusible materials will depend on their molecular weights. Thus a material of the appropriate molecular weight may be selected to fuse at a predetermined temperature. A mixture of materials of different molecular weights may be used to achieve a desired melting point.

It is also possible for the fusible materials to incorporate an inorganic salt to modify the temperature of fusion.

The preferred fusible material is polyethylene The preferred fusible material is polyethylene glycol ethyl ether (PEGME). If it is desired to produce a label for which the pre-determined temperature is 20°C, then the molecular weight of the PEGME should be 550. For an element for which the pre-determined temperature is -8°C, the molecular weight of PEGME should be 350. A 50:50 mixture of PEGME 500 and PEGME 350 allows an indicating-element to be produced with a pre-determined temperature of 10°C.

The physically detectable change is preferably a colour change. For this purpose, the indicator system may comprise chemical reagents which are together capable of producing the colour change, and the element is such that these reagents are separated from each other below the fusion temperature but above this temperature are able to come together to produce the colour change.

The reagents may for example comprise an indicator dye which changes colour upon change of pH and a further chemical reagent which provides the pH change to effect the colour change. The indicator dye may, for example, be selected from those in Table 1 which also shows the colour change.

**TABLE 1**

| Indicator | Acid | Alkali |
|---|---|---|
| o - Cresol Red | Red | Yellow |
| M - Cresol Purple | Red | Yellow |
| Quinaldine Red | Colourless | Red |
| Methyl Red | Red | Green |
| Phenolthymolphthalein | Colourless | Violet |
| Thymolphthalein | Colourless | Blue |
| Alizarin Yellow R | Yellow | Red |
| Alizarin Yellow GG | Colourless | Yellow |
| Titan Yellow | Yellow | Red |
| Fluorescein | Clear | Fluorescent |

Alternatively, one chemical agent may be an enzyme and the other a substrate therefor which results in a colour change. Table 2 gives examples of enzyme-substrate combinations which could be used.

**TABLE 2**

| Enzyme | Substrate |
|---|---|
| -galactosidase | o - nitrophenyl galactoside |
| chymotrypsin | p - nitrophenylacetate |
| urease | urea/indicator |
| glucose oxidase/peroxidase | glucose/ABTS (2,2'-Azinobis 3-ethyl benz thiaizoline sulphonic acid) |

Preferably the indicating element incorporates an absorbent layer (eg. paper or a powdered material such as kieselguhr) along which the fusible material travels to produce the physically detectable change. Such a change may be provided by the type of chemical reaction discussed above, one of the chemical reagents being provided in the fusible material and the other in the absorbent layer so that the colour change is produced as the fusible material travels along the layer. Alternatively, the fusible material may incorporate a dye (preferably an azo dye) so that the physically detectable change is a colouration of the absorbent material.

Preferably the element is produced with a barrier layer between the absorbent material and the fusible material. As such, the label is only "activated" for use when the barrier layer is punctured. Such a barrier may for example be of an ultrasonically destructible material (eg. polycarbonate or a polyacrylate) so that the layer may be destroyed by an ultrasonic probe. Alternatively, the barrier layer may be one which is destroyed by application of a heated probe.

Preferably the indicating element is constructed such that the fusible material is provided adjacent one end of an elongate channel and (at that end of the channel) is separated by said barrier layer from the absorbent material which extends along the channel. Thus when the barrier layer has been punctured and the predetermined temperature has been exceeded the fusible material flows along the channel producing said detectable change. The extent to which the fusible material flows along the channel (and thus extent of the detectable change along the channel) is an indication of the total time at which the marking element has been above the predetermined temperature.

A particularly suitable way of producing the indicating element as described in the previous paragraph is to print a layer of an ink onto a carrier sheet such that the channel is formed in the ink. Alternatively, the channel may be die-cut from a plastics film on a backing paper. The absorbent material may be laid in position along the channel and then overlaid by a film providing the barrier layer. The fusible material may then be provided in the region of the barrier layer above the absorbent material and the whole then overlaid by a further film.

Ideally the elongate channel is formed at one end with an enlarged 'reservoir' region in which the first material is received.

In an alternative construction, the element may comprise a reservoir formed by printing a "dam" in the form of an encircling line of an ink or varnish, providing the fusible material within the confines of the dam, and overlaying the dam with a barrier layer and an absorbent layer (preferably paper). This absorbent layer will be treated over the majority of its area with a sealing agent so that (over this area) the layer is non-absorbent. A residual portion of the area of the layer (preferable an elongate area) will be absorbent. The element may be activated by the application of a point probe to puncture the barrier layer towards one end of the residual absorbent area of the paper layer. As a result, flow of material (above the fusion temperature) can only occur from one end of the absorbent area.

The indicating elements of the invention may be used in various ways. For example, they may be applied to the packaging of individual items so that the purchaser of such an item is able to tell whether the predetermined temperature condition has been exceeded. It is possible, for example, for the indicating element to be incorporated as part of a bar code on the item so that the code cannot be read if the predetermined temperature has been exceeded and this provides an immediate indication at the point of sale that the product may not be satisfactory. Alternatively, the indicating element can be applied to an outer carton containing a number of individual products. The receiver of the carton is then able to tell immediately whether the carton (and thus the products) have been stored in accordance with the predetermined temperature condition.

The invention will be further described by way of example only with reference to the accompanying drawings, in which:
Fig. 1 is an exploded perspective view of one embodiment of label in accordance with the invention;
Fig. 2 shows the label after storage above the permitted temperature; and
Fig. 3 is an exploded perspective view of a further embodiment of label in accordance with the invention.

The construction of the label 1 will be described by reference to its method of production.

A carrier sheet 2 (which is adhesively coated on its reverse face) is printed with an ink layer 3 (e.g. a polymer based ink) which is such that a layer 3 of predetermined thickness is laid down. Layer 3 is shown as being generally rectangular but does include a circular aperture 4 adjacent to one end of a longitudinally extending rectangular channel 5. A plurality of rectangular ink layers 3 may be printed onto the carrier sheet 2. The layer 3 may, for example be white.

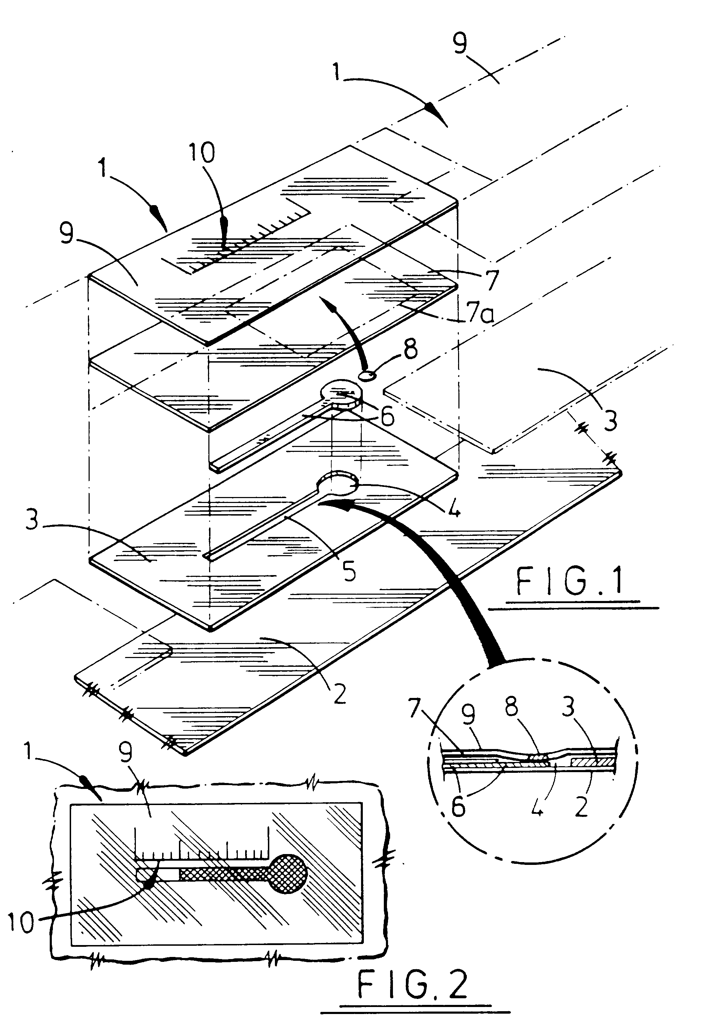

An absorbent paper wick 6 is then laid completely along the length of channel 5, the wick 6 being of sufficient length so as to extend over into the aperture 4 where the wick terminates (see inset to drawing). Instead of a paper wick it is possible to use a powder wick, e.g. of kieselguhr. Furthermore, although Fig 1 shows the channel 5 opening into aperture 4, it is possible for there to be a barrier of the ink 3 between the end of channel 5 and the aperture 4. In such a case, the wick 6 may simply extend over the barrier.

In the next stage of manufacture, a clear layer 7 of a heat shrink film is laminated onto the ink layer 3. For convenience, the drawing shows layer 7 as being coterminous with layer 3 but in practice a single layer 7 may be provided to overlie all of the layers 3.

An amount of a temperature condition indicator material 8 is then introduced into aperture 4 and 'sits' on the layer 7 above the wick 6. This material will be a fusible material of the type described above and has a viscosity such that the material does not flow (at least to any substantial extent) below a predetermined temperature, but will be capable of flowing along the wick 6 above this temperature. The predetermined temperature is the temperature above which a product (with which the finished label will be associated) should not be stored, or at least not stored above the temperature for more than a predetermined time.

The material 8 will generally be coloured, e.g. by the incorporation of a dye therein. A red dye is particularly suitable for use in conjunction with a white layer 3. Alternatively, the material 8 may incorporate a first chemical reagent whereas the absorbent wick 6 may be impregnated with a second chemical reagent, the first and second reagents being capable of reacting together to produce a colour change.

In the final stage of manufacture, a further clear layer 9 is applied. This layer 9 may of course be a single layer overlying all of the layers 3.

Layer 9 is of a material which melts (or softens) only at a higher temperature than does layer 7. This latter layer may for example be one which melts or softens at 100 to 120°C. Furthermore, layer 9 may be printed with indicia, such as the scale 10 and other information e.g. company name (not shown).

In use, the label is attached to the packaging of a product whose storage temperature is to be monitored. The label is then activated by the application of a point source to heat. This can be achieved by using a flat pointed probe of 2-2.5 mm in diameter heated to at least 100°C but no higher than 120°C (a hand held soldering iron will suffice it can be controlled to the desired temperature). The flat pointed is applied within the circular area of the label and should be held in position for 0.5-1m seconds. As a result, layer 7 is punctured so that material 8 is able to come into contact with the wick 6.

Once activated, the label must be maintained below the specified storage temperature for the product.

If the temperature at which the product is stored rises above the predetermined temperature then the material 8 will become less viscous and will be capable of flowing along the wick 6. The material 8 will continue to flow along the wick for so long as the predetermined temperature is exceeded. This will result in the wick becoming indelibly coloured over a part of its length extending from its end adjacent aperture 4 (see Fig. 2). It will be appreciated that in the event of the product being stored above the permitted temperature and then returned to below the permitted temperature, the material 8 increases in viscosity to prevent movement along the wick 6 although the indelible colouring of the wick 6 is maintained. If the product should then once again be stored above the permitted temperature, the viscosity of material 8 will decrease and the material can advance further along the wick.

A measure of the length of time for which the temperature has been exceeded may be obtained by reference to the scale 10, the graduations of which may be representative of the number of minutes exposure above the predetermined time. It is obviously an easy matter to inspect the scale visually to obtain a representation of the total time that the product has been stored above the predetermined temperature If this time is excessive then the product may be discarded.

It should be appreciated that the labels 1 may be used in a number of ways. For example, the label may be attached to the packaging of individual products so that a purchaser of the product (e.g. in a supermarket) can determine the time for which the product has been stored above the permitted temperature. Alternatively, a label may be attached to a carton in which the products are delivered to (say) a supermarket. In this case, the supermarket personnel are able to decide whether the product has been stored above the permitted temperature for too long.

As a modification of the element illustrated in Fig. 1, the layer 7 may be replaced by a somewhat smaller area layer 7a of a material which may be punctured by an ultrasonic probe. This material may for example be a polyacrylate or a polycarbonate.

The method of producing the label shown in Fig. 1 involves the initial printing of the layer 3 incorporating the aperture 4 and channel 5. An alternative method of manufacture starts with a laminate which comprises a plastics layer having an adhesive coating sandwiched between the plastics layer and a paper backing sheet. A recess having the same shape as illustrated in Fig. 1 (ie. the aperture 4 combined with channel 5) is produced in the plastics layer by die-cutting the plastics down to the level of the adhesive. The plastic shape thus cut out may be removed and the label may then be produced as otherwise described with reference to Fig. 1.

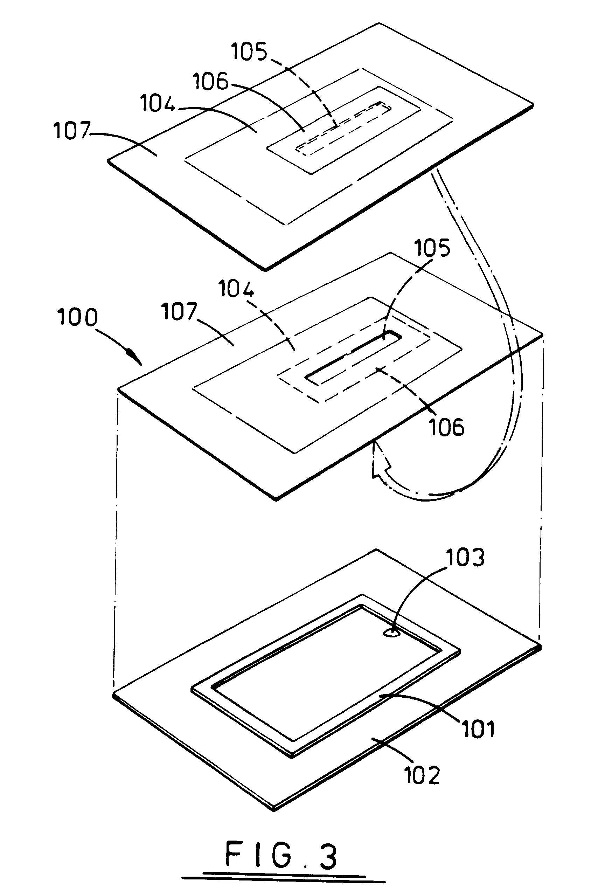

Referring now to Fig. 3, a label 100 is produced by the following steps. A rectangular trace 101 of a hydrophobic ink is printed onto an adhesively backed paper carrier sheet 102. Towards one end of the "well" provided by the rectangular trace 101 is a portion of fusible material 103 of the type described above. Positioned over the full area of the "well" is a paper layer 104. This layer 104 has been sealed over substantially its entire area save for a rectangular strip 105 which remains absorbent. Beneath the rectangular strip is a layer 106 of a material which may be punctured by an ultrasonic probe. The label also incorporates an upper, over-laminating layer 107. To activate the label illustrated in Fig. 3, an ultrasonic probe is applied towards one end of the rectangular area 105 so as to puncture the layer 106. Since the paper 104 is only absorbent over the length of the strip 105, any flow of the material 103 is confined to this strip 105.

In a modification of the label illustrated in Fig. 3, the layer 106 may be replaced by a layer of a material with a temperature at which it will soften and puncture below that of layer 107 provided over the full area of the label.

The indicating element according to the invention may also take a number of forms other than that illustrated in the accompanying drawings.

For example, the indicating element may comprise a backing paper, a paper strip forming a wick which is positioned on the backing paper, a heat sensitive laminate applied over the backing paper and paper strip, a paper pad positioned over one end of the paper strip and containing the indicator material, and a final laminate to seal the system.

Furthermore, it is not essential that the indicating element be used as an indicator of the time for which the product has been stored above a particular temperature. The indicating element may be used, for example, merely to indicate that a particular storage temperature has been exceeded. For example, the indicating element may comprise a circular paper pad (fixed to a support) overlaid by a heat-sensitive polymer layer between which and an upper laminate layer is sandwiched the indicator material. To use the indicating element, the heat sensitive polymer layer is punctured as described above. If the indicating element is subjected to a temperature above that at which the indicator material will flow, then this material flows into the paper pad and provides an indication that a predetermined temperature has been exceeded.

## Claims (Claims for the following Contracting State(s): AT, BE, CH, LI, DE, DK, ES, FR, GR, IT, LU, NL, SE)

1. An indicating element for use in conjunction with a product which needs to be maintained under a pre-determined temperature condition, the indicating element comprising a fusible material which is capable of flowing above the predetermined temperature and which comprises polycaprolactone triol, polyethylene glycol C₁₋₄ alkyl ether, or polyvinyl alcohol, a substrate into which said material may flow, and an indicator system for producing a physically detectable change in this substrate when said material flows therein.

2. An element as claimed in claim 1 wherein the fusible material is polyethylene glycol C₁₋₄ alkyl ether.

3. An element as claimed in claim 1 or 2 wherein the fusible material incorporates an inorganic salt to modify its temperature of fusion.

4. An element as claimed in any one of claims 1 to 3 wherein the physically detectable change is a colour change.

5. An element as claimed in claim 4 wherein the indicator system comprises chemical reagents which are together capable of producing said colour change, the element being such that the fusible material allows the reagents to come together to produce the colour change only above the fusion temperature of the material.

6. An element as claimed in claim 5 wherein one of the chemical reagents is an indicator dye which changes colour upon change of pH and a further chemical reagent provides the change of pH to effect the colour change.

7. An element as claimed in claim 5 wherein one of the chemical reagents is an enzyme and a further chemical reagent is a substrate therefore which results in the colour change.

8. An element as claimed in any one of claims 1 to 3 incorporating an absorbent layer along which the fusible material travels to produce the physically detectable change.

9. An element as claimed in claim 1 wherein the indicator system comprises a dye incorporated in the fusible material whereby the physically detectable change is a colouration of the absorbent material.

10. An element as claimed in claim 8 wherein the indicator system comprises chemical reagents which are together capable of producing a colour change, the element being such that the fusible material allows the reagents to come together to produce the colour change only above the fusion temperature of the material.

11. An element as claimed in any one of claims 8 to 10 wherein the absorbent material is paper.

12. An element as claimed in any one of claims 8 to 11 wherein the absorbent material is a powdered material.

13. An element as claimed in any one of claims 8 to 12 wherein the absorbent layer is an elongate layer.

14. An element as claimed in claim 13 wherein the fusible material is located adjacent one end of the elongate absorbent layer.

15. An element as claimed in any one of claims 8 to 14 wherein the element as produced has a destructible barrier layer between the fusible material and the absorbent layer, said barrier layer being destroyed to activate the element prior to use thereof.

16. An element as claimed in claim 15 wherein a protective layer is provided over the absorbent layer and the fusible material.

17. An element as claimed in claim 15 or 16 wherein the barrier layer is ultrasonically destructible.

18. An element as claimed in claim 15 wherein the barrier layer is of polycarbonate or a polyacrylate.

19. An element as claimed in claim 16 wherein the barrier layer is of a material with a lower melting point than the protective layer.

20. An element as claimed in any one of claims 8 to 19 wherein the absorbent layer and fusible material are provided in a shallow recess.

## Claims (Claims for the following Contracting State(s): GB)

1. An indicating element for use in conjunction with a product which needs to be maintained under a pre-determined temperature condition, the indicating element comprising a fusible material which is capable of flowing above the predetermined temperature and which comprises polycaprolactone triol, polyethylene glycol C₁₋₄ alkyl ether, or polyvinyl alcohol, a substrate into which said material may flow, and an indicator system for producing a physically detectable change in this substrate when said material flows therein.

2. An element as claimed in claim 1 wherein the fusible material is polyethylene glycol C₁₋₄ alkyl ether.

3. An element as claimed in claim 1 or 2 wherein the fusible material incorporates an inorganic salt to modify its temperature of fusion.

4. An element as claimed in any one of claims 1 to 3 wherein the physically detectable change is a colour change.

5. An element as claimed in claim 4 wherein the indicator system comprises chemical reagents which are together capable of producing said colour change, the element being such that the fusible material allows the reagents to come together to produce the colour change only above the fusion temperature of the material.

6. An element as claimed in claim 5 wherein one of the chemical reagents is an indicator dye which changes colour upon change of pH and a further chemical reagent provides the change of pH to effect the colour change.

7. An element as claimed in claim 5 wherein one of the chemical reagents is an enzyme and a further chemical reagent is a substrate therefore which results in the colour change.

8. An element as claimed in any one of claims 1 to 3 incorporating an absorbent layer along which the fusible material travels to produce the physically detectable change.

9. An element as claimed in claim 1 wherein the indicator system comprises a dye incorporated in the fusible material whereby the physically detectable change is a colouration of the absorbent material.

10. An element as claimed in claim 8 wherein the indicator system comprises chemical reagents which are together capable of producing a colour change, the element being such that the fusible material allows the reagents to come together to produce the colour change only above the fusion temperature of the material.

11. An element as claimed in any one of claims 8 to 10 wherein the absorbent material is paper.

12. An element as claimed in any one of claims 8 to 11 wherein the absorbent material is a powdered material.

13. An element as claimed in any one of claims 8 to 12 wherein the absorbent layer is an elongate layer.

14. An element as claimed in claim 13 wherein the fusible material as located adjacent one end of the elongate absorbent layer.

## Patentansprüche (Patentansprüche für folgende(n) Vertragsstaat(en): AT, BE, CH, LI, DE, DK, ES, FR, GR, IT, LU, NL, SE)

1. Anzeigeeinheit zur Verwendung in Verbindung mit einem Produkt, welches unter einer vorbestimmten Temperaturbedingung gelagert werden muß, wobei die Anzeigeeinheit ein schmelzbares Material, das in der Lage ist, oberhalb der vorbestimmten Temperatur zu fließen und aus Polycaprolactontriol, Polyethylenglycol-C₁₋₄-Alkylether oder Polyvinylalkohol besteht, ein Substrat, in das das Material fließen kann und ein Anzeigesystem umfaßt, das dazu bestimmt ist, eine physikalisch erfaßbare Änderung in diesem Substrat herbeizuführen, wenn das Material darin hineinfließt.

2. Einheit nach Anspruch 1, bei der das schmelzbare Material Polyethylenglycol-C₁₋₄-Alkylether darstellt.

3. Einheit nach Anspruch 1 oder 2, bei der ein anorganisches Salz im schmelzbaren Material zur Modifizierung seiner Schmelztemperatur enthalten ist.

4. Einheit nach einem der Ansprüche 1 bis 3, bei der es sich bei der physikalisch erfaßbaren Änderung um eine Farbänderung handelt.

5. Einheit nach Anspruch 4, bei der das Anzeigesystem chemische Reagenzmittel umfaßt, welche zusammen in der Lage sind, die genannte Farbänderung herbeizuführen, wobei die Einheit derart beschaffen ist, daß das schmelzbare Material die Reagenzmittel zusammenkommen läßt, und zwar derart, daß die Farbänderung nur bei Temperaturen über der Schmelztemperatur des Materials herbeigeführt wird.

6. Einheit nach Anspruch 5, bei der eines der chemischen Reagenzmittel ein Indikatorfarbstoff ist, der seine Farbe bei Änderung des pH-werts ändert, und ein weiteres chemisches Reagenzmittel die Änderung des pH-Werts zum Herbeiführen der Farbänderung bewirkt.

7. Einheit nach Anspruch 5, bei der eines der chemischen Reagenzmittel ein Enzym ist und ein weiteres chemisches Reagenzmittel ein Substrat für dasselbe darstellt, das die Farbänderung zur Folge hat.

8. Einheit nach einem der Ansprüche 1 bis 3, welches eine absorptionsfähige Schicht enthält, entlang welcher sich das schmelzbare Material zum Herbeiführen der physikalisch erfaßbaren Änderung bewegt.

9. Einheit nach Anspruch 1, bei der das Anzeigesystem einen im schemlzbaren Material enthaltenen Farbstoff umfaßt, wobei es sich bei der physikalisch erfaßbaren Änderung um eine Färbung des absorptionsfähigen Materials handelt.

10. Einheit nach Anspruch 8, bei der das Anzeigesystem chemische Reagenzmittel umfaßt, welche zusammen in der Lage sind, eine Farbänderung herbeizuführen, wobei die Einheit derart beschaffen ist, daß das schmelzbare Material die Reagenzmittel zusammenkommen läßt, und zwar derart, daß die Farbänderung nur bei Temperaturen über der Schmelztemperatur des Materials herbeigeführt wird.

11. Einheit nach einem der Ansprüche 8 bis 10, bei der es sich bei dem absorptionsfähigen Material um Papier handelt.

12. Einheit nach einem der Ansprüche 8 bis 11, bei der es sich bei dem absorptionsfähigen Material um ein pulverförmiges Material handelt.

13. Einheit nach einem der Ansprüche 8 bis 12, bei der die absorptionsfähige Schicht eine längliche Schicht ist.

14. Einheit nach Anspruch 13, bei der das schmelzbare Material an einem Ende der länglichen absorptionsfähigen Schicht angeordnet ist.

15. Einheit nach einem der Ansprüche 8 bis 14, bei der die Einheit im Herstellungszustand zwischen dem schmelzbaren Material und der absorptionsfähigen Schicht eine zerstörbare Sperrschicht aufweist, wobei diese Sperrschicht zum Aktivieren der Einheit vor ihrer Anwendung zerstört wird.

16. Einheit nach Anspruch 15, bei der eine Schutzschicht über der absorptionsfähigen Schicht und dem schmelzbaren Material angebracht ist.

17. Einheit nach Anspruch 15 oder 16, bei der die Sperrschicht sich durch Ultraschall zerstören läßt.

18. Einheit nach Anspruch 15, bei der die Sperrschicht aus Polycarbonat oder einem Polyacrylat besteht.

19. Einheit nach Anspruch 16, bei der die Sperrschicht aus einem Material mit einem niedrigeren Schmelzpunkt als die Schutzschicht besteht.

20. Einheit nach einem der Ansprüche 8 bis 19, bei der die absorptionsfähige Schicht und das schmelzbare Material sich in einer flachen Vertiefung befinden.

## Patentansprüche (Patentansprüche für folgende(n) Vertragsstaat(en): GB)

1. Anzeigeeinheit zur Verwendung in Verbindung mit einem Produkt, welches unter einer vorbestimmten Temperaturbedingung gelagert werden muß, wobei die Anzeigeeinheit ein schmelzbares Material, das in der Lage ist, oberhalb der vorbestimmten Temperatur zu fließen und aus Polycaprolactontriol, Polyethylenglycol-C₁₋₄-Alkylether oder Polyvinylalkohol besteht, ein Substrat, in das das Material fließen kann und ein Anzeigesystem umfaßt, das dazu bestimmt ist, eine physikalisch erfaßbare Änderung in diesem Substrat herbeizuführen, wenn das Material darin hineinfließt.

2. Einheit nach Anspruch 1, bei der das schmelzbare Material Polyethylenglycol-C₁₋₄-Alkylether darstellt.

3. Einheit nach Anspruch 1 oder 2, bei der ein anorganisches Salz im schmelzbaren Material zur Modifizierung seiner Schmelztemperatur enthalten ist.

4. Einheit nach einem der Ansprüche 1 bis 3, bei der es sich bei der physikalisch erfaßbaren Änderung um eine Farbänderung handelt.

5. Einheit nach Anspruch 4, bei der das Anzeigesystem chemische Reagenzmittel umfaßt, welche zusammen in der Lage sind, die genannte Farbänderung herbeizuführen, wobei die Einheit derart beschaffen ist, daß das schmelzbare Material die Reagenzmittel zusammenkommen läßt, und zwar derart, daß die Farbänderung nur bei Temperaturen über der Schmelztemperatur des Materials herbeigeführt wird.

6. Einheit nach Anspruch 5, bei der eines der chemischen Reagenzmittel ein Indikatorfarbstoff ist, der seine Farbe bei Änderung des pH-Werts ändert, und ein weiteres chemisches Reagenzmittel die Änderung des pH-Werts zum Herbeiführen der Farbänderung bewirkt.

7. Einheit nach Anspruch 5, bei der eines der chemischen Reagenzmittel ein Enzym ist und ein weiteres chemisches Reagenzmittel ein Substrat für dasselbe darstellt, das die Farbänderung zur Folge hat.

8. Einheit nach einem der Ansprüche 1 bis 3, welches eine absorptionsfähige Schicht enthält, entlang welcher sich das schmelzbare Material zum Herbeiführen der physikalisch erfaßbaren Änderung bewegt.

9. Einheit nach Anspruch 1, bei der das Anzeigesystem einen im schemlzbaren Material enthaltenen Farbstoff umfaßt, wobei es sich bei der physikalisch erfaßbaren Änderung um eine Färbung des absorptionsfähigen Materials handelt.

10. Einheit nach Anspruch 8, bei der das Anzeigesystem chemische Reagenzmittel umfaßt, welche zusammen in der Lage sind, eine Farbänderung herbeizuführen, wobei die Einheit derart beschaffen ist, daß das schmelzbare Material die Reagenzmittel zusammenkommen läßt, und zwar derart, daß die Farbänderung nur bei Temperaturen über der Schmelztemperatur des Materials herbeigeführt wird.

11. Einheit nach einem der Ansprüche 8 bis 10, bei der es sich bei dem absorptionsfähigen Material um Papier handelt.

12. Einheit nach einem der Ansprüche 8 bis 11, bei der es sich bei dem absorptionsfähigen Material um ein pulverförmiges Material handelt.

13. Einheit nach einem der Ansprüche 8 bis 12, bei der die absorptionsfähige Schicht eine längliche Schicht ist.

14. Einheit nach Anspruch 13, bei der das schmelzbare Material an einem Ende der länglichen absorptionsfähigen Schicht angeordnet ist.

## Revendications (Revendications pour l'(les) Etat(s) contractant(s) suivant(s): AT, BE, CH, LI, DE, DK, ES, FR, GR, IT, LU, NL, SE)

1. Elément indicateur à utiliser conjointement avec un produit qui doit être maintenu dans une condition de température prédéterminée, l'élément indicateur comprenant une matière fusible capable de s'écouler au-dessus de la température prédéterminée et qui comprend du polycaprolactonetriol, des éthers alkyliques en C₁-C₄ de polyéthylèneglycol ou encore de l'alcool polyvinylique, un substrat dans lequel ladite matière peut s'écouler, et un système d'indicateur pour produire un changement physiquement détectable dans ce substrat lorsque ladite matière s'y écoule.

2. Elément selon la revendication 1, dans lequel la matière fusible est un éther alkylique en C₁-C₄ de polyéthylèneglycol.

3. Elément selon la revendication 1 ou 2, dans lequel la matière fusible englobe un sel inorganique pour modifier sa température de fusion.

4. Elément selon l'une quelconque des revendications 1 à 3, dans lequel le changement physiquement détectable est un changement de couleur.

5. Elément selon la revendication 4, dans lequel le système d'indicateur comprend des réactifs chimiques qui sont capables de produire ensemble ledit changement de couleur, l'élément étant tel que la matière fusible permet aux réactifs de se combiner pour produire le changement de couleur uniquement au-dessus de la température de fusion de la matière.

6. Elément selon la revendication 5, dans lequel un des réactifs chimiques est un colorant indicateur qui change de couleur lorsque le pH change, et un réactif chimique supplémentaire procure le changement de pH pour réaliser le changement de couleur.

7. Elément selon la revendication 5, dans lequel un des réactifs chimiques est une enzyme et un réactif chimique supplémentaire est un substrat pour cette dernière, qui donne lieu au changement de couleur.

8. Elément selon l'une quelconque des revendications 1 à 3, englobant une couche absorbante le long de laquelle se déplace la matière fusible pour produire le changement physiquement détectable.

9. Elément selon la revendication 1, dans lequel le système d'indicateur comprend un colorant incorporé dans la matière fusible, par lequel le changement physiquement détectable est une coloration de la matière absorbante.

10. Elément selon la revendication 8, dans lequel le système d'indicateur comprend des réactifs chimiques qui sont capables de produire ensemble un changement de couleur, l'élément étant tel que la matière fusible permet aux réactifs de se combiner pour produire le changement de couleur uniquement au-dessus de la température de fusion de la matière.

11. Elément selon l'une quelconque des revendications 8 à 10, dans lequel la matière absorbante est du papier.

12. Elément selon l'une quelconque des revendications 8 à 11, dans lequel la matière absorbante est une matière pulvérulente.

13. Elément selon l'une quelconque des revendications 8 à 12, dans lequel la couche absorbante est une couche allongée.

14. Elément selon la revendication 13, dans lequel la matière fusible est située en position adjacente à une extrémité de la couche absorbante allongée.

15. Elément selon l'une quelconque des revendications 8 à 14, dans lequel l'élément, lorsqu'il est produit, comporte une couche d'arrêt destructible entre la matière fusible et la couche absorbante, ladite couche d'arrêt étant détruite pour activer l'élément avant son utilisation.

16. Elément selon la revendication 15, dans lequel on procure une couche protectrice par-dessus la couche absorbante et la matière fusible.

17. Elément selon la revendication 15 ou 16, dans lequel la couche d'arrêt peut être détruite par ultrasons.

18. Elément selon la revendication 15, dans lequel la couche d'arrêt est constituée de polycarbonate ou d'un polyacrylate.

19. Elément selon la revendication 16, dans lequel la couche d'arrêt est constituée d'une matière possédant un point de fusion inférieur à celui de la couche protectrice.

20. Elément selon l'une quelconque des revendications 8 à 19, dans lequel la couche absorbante et la matière fusible sont prévues dans un évidement peu profond.

## Revendications (Revendications pour l'(les) Etat(s) contractant(s) suivant(s): GB)

1. Elément indicateur à utiliser conjointement avec un produit qui doit être maintenu dans une condition de température prédéterminée, l'élément indicateur comprenant une matière fusible capable de s'écouler au-dessus de la température prédéterminée et qui comprend du polycaprolactonetriol, des éthers alkyliques en C₁-C₄ de polyéthylèneglycol ou encore de l'alcool polyvinylique, un substrat dans lequel ladite matière peut s'écouler, et un système d'indicateur pour produire un changement physiquement détectable dans ce substrat lorsque ladite matière s'y écoule.

2. Elément selon la revendication 1, dans lequel la matière fusible est un éther alkylique en C₁-C₄ de polyéthylèneglycol.

3. Elément selon la revendication 1 ou 2, dans lequel la matière fusible englobe un sel inorganique pour modifier sa température de fusion.

4. Elément selon l'une quelconque des revendications 1 à 3, dans lequel le changement physiquement détectable est un changement de couleur.

5. Elément selon la revendication 4, dans lequel le système d'indicateur comprend des réactifs chimiques qui sont capables de produire ensemble ledit changement de couleur, l'élément étant tel que la matière fusible permet aux réactifs de se combiner pour produire le changement de couleur uniquement au-dessus de la température de fusion de la matière.

6. Elément selon la revendication 5, dans lequel un des réactifs chimiques est un colorant indicateur qui change de couleur lorsque le pH change, et un réactif chimique supplémentaire procure le changement de pH pour réaliser le changement de couleur.

7. Elément selon la revendication 5, dans lequel un des réactifs chimiques est une enzyme et un réactif chimique supplémentaire est un substrat pour cette dernière, qui donne lieu au changement de couleur.

8. Elément selon l'une quelconque des revendications 1 à 3, englobant une couche absorbante le long de laquelle se déplace la matière fusible pour produire le changement physiquement détectable.

9. Elément selon la revendication 1, dans lequel le système d'indicateur comprend un colorant incorporé dans la matière fusible, par lequel le changement physiquement détectable est une coloration de la matière absorbante.

10. Elément selon la revendication 8, dans lequel le système d'indicateur comprend des réactifs chimiques qui sont capables de produire ensemble un changement de couleur, l'élément étant tel que la matière fusible permet aux réactifs de se combiner pour produire le changement de couleur uniquement au-dessus de la température de fusion de la matière.

11. Elément selon l'une quelconque des revendications 8 à 10, dans lequel la matière absorbante est du papier.

12. Elément selon l'une quelconque des revendications 8 à 11, dans lequel la matière absorbante est une matière pulvérulente.

13. Elément selon l'une quelconque des revendications 8 à 12, dans lequel la couche absorbante est une couche allongée.

14. Elément selon la revendication 13, dans lequel la matière fusible est située en position adjacente à une extrémité de la couche absorbante allongée.
